# EUROPEAN PATENT APPLICATION

(11) **EP 1 912 059 A1**
(43) Date of publication of application: **16.04.2008**
(21) Application number: 06122141.2
(22) Date of filing: 11.10.2006
(51) Int. Cl.: G01N 21/64

(54) **Mobile device for fluorescence detection and its use**

(71) Applicant: BASF SE, 67056 Ludwigshafen (DE)
(72) Inventor: The designation of the inventor has not yet been filed
(74) Representative: Reitstötter - Kinzebach

(57) **Abstract**

The present invention relates to a mobile device for fluorescence detection. The device comprises an excitation source for emitting electromagnetic radiation to a sample position, wherein the wavelength of the emitted radiation at peak emission is in a range of 350 nm to 500 nm, and means for detecting the fluorescing light emitted from the sample position. Furthermore, the invention is related to the use of said mobile device for fluorescence detection.

## Description

The present invention relates to a mobile device for fluorescence detection and its use in particular in environmental analysis.

Fluorescence detection is a widely used analytical method that relies upon the use of fluorescent probes, enabling a sensitive and selective detection of particular components of complex biomolecular assemblies, including live cells. A number of immunofluorescence kits for detecting plant pathogens are commercially available.

In fluorescence spectroscopy the substance to be determined which is present in a liquid or a solid phase is subjected to radiation with a known spectral distribution, for instance light with a limited band width. The fluorescent radiation emitted has a longer wavelength than the exciting radiation and is specific to the substance to be determined. The measurement of the intensity of the fluorescent radiation constitutes a quantification of the substance to be determined.

Fluorescence detection systems usually comprise an excitation source, a fluorophore, wavelength filters to isolate emission photons from excitation photons and a detector that registers emission photons and produces a recordable output, usually as an electrical signal or a photographic image. Regardless of the application, compatibility of these elements is essential for optimizing fluorescence detection.

Current types of instrumentation that use fluorescence detection include spectrofluorometers and microplate readers which measure the average properties of bulk (µl to ml) samples; fluorescence microscopes which resolve fluorescence as a function of spatial coordinates in two or three dimensions for microscopic objects (less than ~0.1 mm diameter); fluorescence scanners, including microarray readers, which resolve fluorescence as a function of spatial coordinates in two dimensions for macroscopic objects such as electrophoresis gels, blots and chromatograms; flow cytometers which measure fluorescence per cell in a flowing stream, allowing subpopulations within a large sample to be identified and quantitated; as well as capillary electrophoresis apparatus, DNA sequencers and microfluidic devices.

In environmental testing, it is often desirable that both sampling and analyzing be performed by one and the same person, preferably on site. For instance, assisting crop producers in their operations by detecting plant pathogens before they become a serious problem in a crop requires that the detection can be carried out by the crop producer, preferably on field. However, the instrumentation currently used for fluorescence detection is designed to be used in a laboratory environment only.

For instance, US 5,981,958 describes an imaging fluorometer comprising as light source a 500 W 120 volt projector lamp emitting visible light and several optical components to illuminate and excite a sample. Excitation and emission filters and an imaging device are also provided. The fluorometer is used to obtain images of the fluorescence emitted by illuminated areas of photosynthetic components, such as those found in leaves. However, said imaging fluorometer is cumbersome, the adjustment of the sensitive optical components is awkward and its power consumption is relatively high.

Indeed such instrumentation is not suitable for on-field use and therefore fluorescence detection usually requires that samples be sent to a laboratory able to carry out fluorescence detection, rendering such detection both expensive and time-consuming.

Consequently, it is one object of the present invention to provide a device for fluorescence detection that is easy to use. In particular, the device should be suitable for on-site and, in the agricultural field, for on-field fluorescence detection.

According to the present invention this object is achieved by a mobile device for fluorescence detection comprising an excitation source for emitting electromagnetic radiation to a sample position, i.e. where the sample is to be placed for analysis, wherein the wavelength of the emitted radiation at peak emission is in a range from 350 nm to 500 nm, and means for detecting the fluorescing light emitted from the sample position.

The term "mobile" as used herein means that it can be used on site, e.g. in a field. Thus, the device is portable, i.e. it can be carried by a person. Preferably the device is a hand-held device. For example, the largest dimension of the device is less than 30 cm, particularly less than or equal 25 cm. According to another example the largest dimension of the device is less than 12 cm, particularly less than or equal 10 cm. The weight of the device may be less than 650 g, particularly about 600 g or less than or equal 320 g, and preferably about 300 g.

Further, the device preferably comprises a power supply for at least the excitation source and the detecting means, rendering the device independent of a stationary power supply. The power supply is part of the mobile device. Suitable power supplies include a disposable or rechargeable battery.

According to one embodiment the wavelength of the electromagnetic radiation of the excitation source having an intensity greater than 5% of the intensity at peak emission is in a range of 440 to 500 nm. The wavelength of the excitation source at peak emission is, for example, about 470 nm.

According to another embodiment the wavelength of the electromagnetic radiation of the excitation source having an intensity greater than 5% of the intensity at peak emission is in a range of 350 to 450 nm, preferably in a range of 368 to 416 nm. The wavelength of the excitation source at peak emission is, for example, about 387 nm.

Due to the narrow-band ultraviolet light emission of the excitation source, it is in principle possible to dispense with further optical elements such as filters between the excitation source and the sample position, rendering the mobile device of the invention quite robust and easy to use, as such further optical components usually need to be adjusted relative to the excitation source and the sample position.

According to an aspect of the invention the excitation source comprises at least one light-emitting diode (LED) emitting radiation having the above-mentioned characteristics. Preferably, the excitation source comprises two light-emitting diodes. However, an array of light-emitting diodes may also be provided. The use of a light-emitting diode provides the advantage that the power consumption of the excitation source is low, which, in turn, is advantageous for mobile use as it increases the capacity of a given energy reservoir. Furthermore, a light-emitting diode is comparatively inexpensive and has a long lifetime, which in turn lowers the expense involved in manufacturing and using the mobile device.

According to a further aspect of the present invention, the mobile detector further comprises at least one light-emitting diode (LED) for emitting white light. The white light-emitting diode may be used for illuminating the sample when the latter is arranged on the mobile device.

Preferably, the excitation source can be deactivated independently of the light-emitting diode for emitting white light. This measure is provided for the safety of the user of the mobile device as the electromagnetic radiation from the excitation source may harm the user.

According to a further aspect of the present invention, the detecting means is a photoelectric imaging device. It preferably comprises an image-generating area sensor. In particular, the detecting means is a camera providing a spatially resolved image. Preferably, the camera is a charged-coupled device (CCD) camera.

According to a further aspect of the present invention, the mobile device further comprises means for magnifying the detected image of a sample at the sample position, for example an optical system comprising one or more lenses. The arrangement between the sample position, the optical system, and the detecting means may be altered so as to provide magnification. Additionally, by such alterations both magnification and focus may be provided at once.

Between the sample position and the imaging device an optical system comprising one or more lenses may be provided. The arrangement between the sample holder, the optical system, and the imaging device can be altered by a single slider so that the magnification can be adjusted from 40 to 140. Additionally, both magnification and focus may be adjusted by the single slider at once.

It may be sufficient to use a black-and-white camera that detects only the intensity of the fluorescing light emitted by the sample. The camera may be a simple web cam as used in consumer electronics. If the imaging device detects only the intensity of the fluorescing light emitted by the sample, a yellow filter is preferably arranged between the detecting means and the sample position.

If the CDD chip of the camera provides colour resolution, only the yellow component of the signal is used for the detection of the fluorescence. Thus, no further filters between the detecting means and the sample position are necessary in this case.

According to a further aspect of the present invention, the mobile device comprises a memory for storing the digital data detected by the detecting means. Preferably, the mobile device further comprises an interface for transferring digital data detected by the imaging device to an external device such as a computer, a personal digital assistant (PDA) or any other device for analysing the digital data detected by the imaging device. The interface may, for example, be a universal serial bus (USB).

According to a further aspect of the present invention, the excitation source is arranged on the same side of the sample position as the imaging device, thereby providing an impinging light microscope.

The mobile device may additionally comprise a sample holder that holds the sample at the sample position. Advantageously, the sample holder comprises means for adjusting the sample relative to the radiation emitted by the excitation source.

Further, the mobile device may comprise means for dimming out ambient light so that the noise of the fluorescence signal is reduced.

According to a particular embodiment of the invention, the mobile device is a hand-held digital microscope characterized by an excitation source for emitting electromagnetic radiation whose wavelength at peak emission is in a range of 350 nm to 500 nm.

Hand-held digital microscopes for use in light microscopy are available. The device of the present invention, however, differs from such microscopes in that the device of the present invention comprises the excitation source for emitting electromagnetic radiation at peak emission of a wavelength in the range of 350 nm to 500 nm. Thus, it is in principle possible to obtain a device of the present invention by adding such an excitation source to a hand-held digital microscope. For instance, if the hand-held digital microscope for use in light microscopy comprises an LED for emitting white light, this LED may be replaced by an LED for emitting electromagnetic radiation of a wavelength between 350 nm and 500 nm.

It is a particular advantage of the mobile device according to the present invention that non-experts can investigate a sample within a short period of time and without the use of expensive equipment. Furthermore, the mobile device according to the present invention is flexible and can be further adjusted and optimized for special applications.

The present invention further relates to the use of the above-described mobile device for fluorescence detection.

In the analytical field, fluorescence detection can be used for detecting an analyte in a sample. Said detection may be carried out by means of fluorescence that is emitted by said analyte itself (sample-immanent fluorescence) or by a fluorescent probe exogenously added to said sample.

An example of sample-immanent fluorescence is the fluorescence emitted by plant samples, e.g. the fluorescence emitted by photosynthetic components such as those found in plant leaves or by other usually aromatic, especially polyaromatic, or heterocyclic compounds found in plants.

Fluorescence detection of an analyte by means of a fluorescent probe is also well known in the art and usually comprises the formation of complexes comprising the analyte, a binding entity comprising a fluorophore and, optionally, one or more further binding moieties.

Thus, according to one embodiment, a method for the fluorescence detection of an analyte in a sample, i.e. a method for determining the presence of an analyte in a sample suspected of containing said analyte, comprises providing the sample, contacting the sample with a binding entity comprising a fluorophore under conditions and time sufficient for the binding entity to form a complex with the analyte, irradiating the complex with appropriate energy, and detecting the fluorescence emission, wherein irradiating and detecting are carried out by using the device of the present invention.

Irradiating the fluorophore causes some of its electrons to "jump" to an excited state. This fluorophore emits fluorescent energy when its electrons return to the ground state.

Actually, fluorescence is the result of a three-stage process that occurs in certain molecules (generally polyaromatic hydrocarbons or heterocycles) called fluorophores or fluorescent dyes. In stage 1 (excitation), a photon of energy hv_{EX} is supplied by an external source such as an incandescent lamp or a laser and absorbed by the fluorophore, creating an excited electronic singlet state (S₁'). In stage 2 (excited state), the excited state exists for a finite time (typically 1-10 nanoseconds). During this time, the fluorophore undergoes conformational changes and is also subject to a multitude of possible interactions with its molecular environment. These processes have two important consequences. First, the energy of S₁' is partially dissipated, yielding a relaxed singlet excited state (S₁) from which fluorescence emission originates. Second, not all the molecules initially excited by absorption (Stage 1) return to the ground state (S₀) by fluorescence emission. Other processes such as collisional quenching, fluorescence resonance energy transfer (FRET) and intersystem crossing may also depopulate S₁. The fluorescence quantum yield, which is the ratio of the number of fluorescence photons emitted (Stage 3) to the number of photons absorbed (Stage 1), is a measure of the relative extent to which these processes occur. In stage 3 (fluorescence emission), a photon of energy hv_{EM} is emitted, returning the fluorophore to its ground state S₀. Due to energy dissipation during the excited-state lifetime, the energy of this photon is lower, and therefore of longer wavelength, than the excitation photon hv_{EX}. The difference in energy or wavelength represented by (hv_{EX} - Hv_{EM}) is called the Stokes shift. The Stokes shift is fundamental to the sensitivity of fluorescence techniques because it allows emission photons to be detected against a low background, isolated from excitation photons. In contrast, absorption spectrophotometry requires measurement of transmitted light relative to high incident light levels at the same wavelength.

The entire fluorescence process is cyclical. Unless the fluorophore is irreversibly destroyed in the excited state (an important phenomenon known as photobleaching), the same fluorophore can be repeatedly excited and detected. The fact that a single fluorophore can generate many thousands of detectable photons is fundamental to the high sensitivity of fluorescence detection techniques. For polyatomic molecules in solution, the discrete electronic transitions represented by hv_{EX} and hv_{EM} are replaced by rather broad energy spectra called the fluorescence excitation spectrum and fluorescence emission spectrum, respectively. The bandwidths of these spectra are parameters of particular importance for applications in which two or more different fluorophores are simultaneously detected. With few exceptions, the fluorescence excitation spectrum of a single fluorophore species in dilute solution is identical to its absorption spectrum. Under the same conditions, the fluorescence emission spectrum is independent of the excitation wavelength, due to the partial dissipation of excitation energy during the excited-state lifetime. The emission intensity is proportional to the amplitude of the fluorescence excitation spectrum at the excitation wavelength.

Fluorophores currently used as fluorescent probes offer sufficient permutations of wavelength range, Stokes shift and spectral bandwidth to meet requirements imposed by the device of the present invention (in particular the 350 to 450 nm excitation). The fluorescence output of a given fluorophore depends on the efficiency with which it absorbs and emits photons, and its ability to undergo repeated excitation/emission cycles. Absorption and emission efficiencies are most usefully quantified in terms of the molar extinction coefficient (ε) for absorption and the quantum yield (QY) for fluorescence. Both are constants under specific environmental conditions. The value of ε is specified at a single wavelength (usually the absorption maximum), whereas QY is a measure of the total photon emission over the entire fluorescence spectral profile. Fluorescence intensity per fluorophore molecule is proportional to the product of ε and QY. The range of these parameters among fluorophores of current practical importance is approximately 5000 to 200,000 cm⁻¹M⁻¹ for ε and 0.05 to 1.0 for QY.

Suitable fluorophores include aminomethylcoumarin acetic acid (AMCA, blue) EDANS, BODIPY 493/503; FL; FL Br2; R6G; 530/550; 558/568; TMR 542/574; TR 589/617; 630/650; 650/665, 6-FAM fluorescein (green), 6-OREGON green 488, TET, Cy3 (red), rhodamines (red), 6-JOE, VIC, HEX, 5-TAMRA, NED, 6-ROX, TEXAS Red7 (red), Cy5, Cy5.5, LaJolla Blue, Cy7, Alexa Fluor carboxylic acids, especially of the 647 and 532 type, e.g. as succinimidyl ester, and IRD41.

A binding entity per definitionem comprises a recognition segment which allows the entity to bind to a binding partner. Thus, the recognition segment is the part of the binding entity that binds to a binding partner, e.g. the analyte or a further binding entity. The binding entity which comprises a fluorophore further comprises a signalling segment. The signalling segment comprises the fluorophore and, thus, is the part that is involved in the emission of fluorescence to produce a signal directly or indirectly indicating that recognition of the analyte by the binding entity has occurred. Direct indication means that the binding entity recognizing the analyte comprises the signalling segment and thus the fluorophore. Indirect indication means that the binding entity recognizing the analyte and the binding entity comprising the signalling segment and thus the fluorophore are different binding entities, with the binding entity comprising the signalling segment being capable of binding to the binding entity that recognizes the analyte. In the indirect method, the recognition segment of the binding entity that comprises the signalling segment is capable of binding to the binding entity that recognizes the analyte. Since one way to enhance fluorescence signals is to increase the number of fluorophores available for detection, such indirect methods may provide means for enhancing the fluorescence signal.

Fluorescence detection is applicable to the detection of to a large variety of analytes.

From a molecular point of view, analytes according to the present invention include, for example, antigens, haptens, antibodies, hormones, enzymes, or polynucleotides.

If the analyte is an antigen, then the binding entity usually comprises an antibody.

If the analyte is an antibody, then the binding entity usually comprises an antigen.

If the analyte is a polynucleotide (target), then the binding entity usually comprises a polynucleotide (that is complementary to the target).

According to another aspect, the analytes according to the present invention are derived from or part of a cell or a cell component, an organism or a part of an organism. Such organisms in particular include fungi, bacteria, nematodes, phytoplasma and viruses.

Thus, particular examples of complexes comprising analyte and binding entity are antibody-antigen complexes (formed in immunodetection methods), and polynucleotide-polynucleotide complexes (formed in polynucleotide hybridization detection methods). Thus, according to a particular embodiment of the present invention, fluorescence is immunofluorescence. Immunofluorescence means that the binding entity comprises an immunoglobulin molecule, e.g. an antibody, or an antigen-binding portion thereof. According to a further particular embodiment of the present invention, fluorescence is fluorescence hybridization. Fluorescence hybridization means that the binding entity comprises a polynucleotide, e.g. DNA. A special embodiment of fluorescence hybridization is fluorescence in situ hybridization (FISH).

Immunoassays for detecting antigen (or antibody) analytes are well established in the art and commonly referred to as fluorescence immunoassays (FIA). Here, fluorescence emission is used to report the presence of the analyte on the basis of specific immunological interactions. Several immunoassays are currently in use. They include the "sandwich" technique for antigen, the antibody assay, and the competitive assay for antigen.

A typical assay using the sandwich technique comprises adding a first antibody (capture antibody) to the sample and allowing the first antibody to complex to the analyte, if present. Typically, said first antibody is capable of specifically binding to the analyte. If desired, unbound first antibody is washed away. Then, a second antibody comprising the fluorophore (detection antibody) is added and the second antibody is allowed to complex to the bound first antibody. Typically, said second antibody is capable of binding to said first antibody. Unbound second antibody and, if present, unbound first antibody, are washed away.

This invention in particular relates to the use of the device for determining the presence of an analyte in a heterogeneous assay. The device is thus especially suitable if fluorescence detection is to be carried out in a two-phase system, i.e. in a solution over a solid phase (for instance, in situ). Such a heterogeneous assay, also referred to as a two-step assay, permits the detection of an analyte upon the contacting of the sample suspected of comprising the analyte (i.e. the solid phase) with a binding entity (and optionally other components). The binding entity is usually provided and applied in the form of a fluidic phase, for instance in the form of a solution comprising the binding entity (and optionally other components). Unbound binding entities are usually removed from the assay medium before detection is achieved. Such a heterogeneous assay allows the detection of the analyte in situ, i.e. in the sample's environment as obtained by sampling.

Detection sensitivity depends on interfering fluorescence or noise in the exciting and detecting systems that increases the background. Interfering fluorescence is generated from substances such as non-specifically bound compounds, sample holders, air particles, and the intrinsic fluorescence of the biological systems. The background is also affected by a heavy scattering which gives rise to an interference, especially when aromatic organic agents with a small Stoke's shift (less than 50 nm) are used.

Suitable binding entities comprising the fluorophore are usually provided in kit form, preferably together with further means for carrying out the assay. Advantageously, the kit comprises all reagents that have to be brought into contact with the sample in order to enable fluorescence detection with the device of the present invention. Accordingly, the method for fluorescence detection uses such a kit and comprises a) providing a sample suspected of comprising the analyte, b) applying the appropriate fluorescence detection kit according to the manufacturer's instructions, and c) determining the fluorescence emitted by the sample using the device of the present invention.

The sample can be any sample that is at risk of containing the analyte. According to a particular embodiment, the method relates to environmental analysis and thus the sample is derived from an environment, especially soil or plant material.

Soil means a mixture of mineral and organic material that plants grow in. In principle, any type of soil can be used. These include sand, silt, clay, loam and mixtures thereof. Sandy loam, clay loam, sandy clay loam, and loam are of particular importance.

According to a further particular embodiment of the present invention, the sample is plant material. As used herein, plant material refers to plants in any stage of maturity or development (including seeds), as well as any tissue or organs (plant parts) taken or derived from any such a plant. Plant parts include, but are not limited to, stems, roots, flowers, ovules, stamens, leaves, embryos, meristematic regions, callus tissue, anther cultures, gametophytes, sporophytes, pollen, microspores, protoplasts, and the like, as well as processed products such as fodder, forage, hay, flour, nutmeat and the like. Accordingly, particular examples of environmental samples include alfalfa, e.g. alfalfa hay, almond, e.g. almond hull, almond nutmeat, apple, e.g. apple pomace, asparagus, avacado, banana, brassica, basil, e.g. dried basil, canola seed, carrot, celery, cherry, citrus oil, coffee bean, corn, e.g. corn grain, corn fodder, corn forage, corn stover, cotton, e.g. cottonseed, cotton gin byproduct, cotton gin waste, cucumber, grape, grass, e.g. grass hay, grass forage, honey, hop, e.g. dry hop, fresh hop, lettuce, fresh mint, onion, e.g. dry bulb onion, green onion, orange, peach, peanut, e.g. peanut hay, peanut hull, peanut nutmeat, pea, e.g. dry pea seed, pear, pecan, potato, e.g. dehydrated potato, potato peel, poultry feed, prune, raisin, rice, e.g. brown rice, rice straw, sorghum, e.g. sorghum grain, sorghum hay, soybean, e.g. soybean hay, spinach, strawberry, sugar beet foliage, sugar beet, e.g. sugar beet root, sugar beet top, sugarcane, summer squash, sunflower, e.g. sunflower oil, sunflower seed, starfruit, tomato, e.g. tomato paste, walnut nutmeat, and wheat, e.g. wheat flour, wheat grain, wheat forage, wheat hay, wheat straw.

The device of the present invention is especially suited for investigating the surface of such samples, e.g. the surface of a plant material such as a leaf. Practically, the device may be placed over the sample, e.g. a leaf, in order to detect the fluorescence emitted by the surface area under investigation, i.e. in situ.

According to one aspect, the use relates to plant disease diagnostics. Such use and the corresponding method comprise detecting a plant pathogen. Plant pathogens include bacteria, fungi, nematodes, phytoplasma and viruses, which may cause plant diseases. The device of the invention allows rapid on-site detection of such plant pathogens in agricultural products such as field, vegetable, orchard, ornamental and field crops.

Fungi of interest include:
- Alternaria species on vegetables and fruit and rice,
- Bipolaris and Drechslera species on cereals, rice and turf,
- Blumeria graminis (powdery mildew) on cereals,
- Botrytis cinerea (gray mold) on strawberries, vegetables, ornamentals and grapevines,
- Erysiphe cichoracearum and Sphaerotheca fuliginea on cucurbits,
- Fusarium and Verticillium species on various plants,
- Mycosphaerella species on cereals, bananas and peanuts,
- Phakopsara pachyrhizi and Phakopsara meibomiae on soybeans
- Phytophthora infestans on potatoes and tomatoes,
- Plasmopara viticola on grapevines,
- Podosphaera leucotricha on apples,
- Pseudocercosporella herpotrichoides on wheat and barley,
- Pseudoperonospora species on hops and cucumbers,
- Puccinia species on cereals,
- Pyricularia oryzae, Cochliobolus miyabeanus and Corticium sasakii (Rhizoctonia solani), Fusarium semitectum (and/or moniliforme), Helminth. Spp, Cercospora oryzae, Cochliobolus miyabeanus, Sarocladium oryzae, S attenuatum, Entyloma oryzae, Gibberella fujikuroi (bakanae), Grainstaining complex (various pathogens), Bipolaris species, Drechslera species, Agaricomycetidae such as Rhizoctonia solani and/or Pythium on rice,
- Rhizoctonia species on cotton, rice and turf,
- Septoria tritici and Stagonospora nodorum on wheat,
- Uncinula necator on grapevines,
- Ustilago species on cereals and sugar cane, and
- Venturia species (scab) on apples and pears;
- Paecilomyces variotii on materials (e.g. wood)

### Viruses of interest include:

Alfalfa mosaic virus, especially in alfalfa, bean, pea, potato, etc; barley yellow dwarf virus, especially in barley, oat, wheat, triticale, maize; beet necrotic yellow vein virus, especially in beet, spinach, etc.; cauliflower mosaic virus, especially in cabbage, cauliflower, broccoli, turnip, radish, etc.; cucumber mosaic virus, especially in bean, clover, beet cucurbits, potato, tobacco, etc.; cereal yellow dwarf virus-RPV, see BYDV-RPV; maize dwarf mosaic virus, especially in maize, sorghum (fodder, grain and weed); petunia asteroid mosaic virus, especially in hop, spinach; poty virus, various; potato virus Y, especially in tobacco; radish mosaic virus, especially in rape, mustards, cabbage, arugula etc.; sugarcane mosaic virus, especially in sugarcane, occasionally sorghum, maize and other gramineae; tomato spotted wilt virus, especially in cucurbits, peanut, potato, soybean, tobacco, etc.; tobacco mosaic virus, especially in bean, beet, tomato, tobacco, etc.; tobacco necrosis virus, especially in bean beet, cucurbits, potato, soybean, tomato, tobacco, etc.; tobacco streak virus, especially in alfalfa, bean, cotton, soybean, tomato, tobacco, etc.; turnip yellow mosaic virus, especially in turnips, cabbages, mustards, rapes; apple chlorotic leaf spot virus, especially in apple, pear, plum/prune, cherry peach, quince, apricot; apple mosaic virus, especially in apple, plum/prune (very rare), hop; apple proliferation phytoplasma, especially in apple; arabis mosaic virus, especially in cherry, peach, elderberry, hop, raspberry, strawberry; apple stem grooving virus, especially in apple; apple stem pitting virus, especially in apple, pear; cherry leaf roll virus, especially in cherry, peach, walnut elderberry; citrus tristeza virus, especially in citrus; petunia asteroid mosaic virus, especially in cherry, plum; prune dwarf virus, especially in cherry, peach, plum/prune; prunus necrotic ringspot virus, especially in cherry, plum/prune, apricot, peach, hop; poty virus, various; plum pox virus (Sharka), especially in plum, apricot, peach, P. mahaleb and other Prunus species, sour cherry (new discovery); papaya ringspot virus, especially in papaya; raspberry bushy dwarf virus, especially in raspberry, black raspberry; raspberry ringspot virus, especially in cherry, plum/prune, raspberry, strawberry, redcurrant; strawberry latent ringspot virus, especially in plum/prune, peach, cherry, elderberry, raspberry, strawberry blackberry, blackcurrant, redcurrant; strawberry mild yellow edge potex virus, especially in strawberry; tobacco ringspot virus, especially in cherry, blueberry, papaya; tobacco streak virus, especially in strawberry, raspberry (red and black); tomato ringspot virus, especially in apple, peach, cherry, plum/prune, raspberry; Verticillium spp., especially in apple, rose, maple; Xanthomonas fragariae, especially in strawberry; acidovorax avenae subsp. cattleyae, especially in orchids; alfalfa moxaic cirus, especially in lupine, Petunia; apple mosaic virus, especially in birch, periwinkle, Petunia, rose, other Rosaceae spp.; arabis mosaic virus, especially in forsythia, narcissus, Petunie, Prunus spp., rose, etc.; calibrachoa mottle virus, especially in Calibrachoa, Petunia; cucumber mosaic virus, especially in begonia, chrysanthemum, geranium, gladiolus, Impatiens, lily, orchids, Petunia, etc.; erysimum latent virus, various; impatiens necrotic spot virus, especially in begonia, carnation, chrysanthemum, dahlia, geranium, gladiolus, Impatiens, narcissus, orchids, Petunia, etc.; petunia ateroid mosaic virus, especially in Petunia; pelargonium flower break virus, especially in geranium; pelargonium leaf curl virus, especially in geranium; pelargonium line pattern virus, especially in geranium; prunus necrotic ringspot virus, especially in Petunia, rose; poty virus, various; potato virus A, especially in Petunia; potato virus X, especially in Petunia; potato virus Y, especially in dahlia, Petunia; Ralstonia solanacearum, especially in geranium; strawberry latent ringspot virus, especially in gladiolus, narcissus, rose; tobacco mosaic virus, especially in geranium, Petunia; tobacco necrosis virus, especially in tulip; tomato mosaic virus, especially in Petunia; tomato ringspot virus, especially in chrysanthemum, carnation, geranium, gladiolus, Impatiens, orchids, Petunia, rose, etc. tobacco ringspot virus, especially in begonia, chrysanthemum, geranium, gladiolus, Impatiens, lily, narcissus, Petunia, rose, etc. tobacco streak virus, especially in dahlia, Impatiens, Petunia; tomato spotted wilt virus, especially in begonia, carnation, chrysanthemum, dahlia, geranium, gladiolus, Impatiens, orchids, Petunia, etc.; Verticillium spp., especially in chrysanthemum, dahlia, rose; Xanthomonas campestris pv. pelargonii, especially in geranium.

The invention will now be described by way of examples with reference to the following figures.
Figure 1 shows a schematic sectional view of the mobile device according to one embodiment of the present invention,
Figure 2 shows a top view of the embodiment shown in Figure 1, and
Figure 3 shows the spectrum of an excitation source which may be used in the device according to the present invention.
Fig. 4 shows a picture made by the device according to the present invention showing PHAKPA (asian soybean rust).
Fig. 5 shows a picture made by the device according to the present invention showing PUCCRT (bean brown rust).

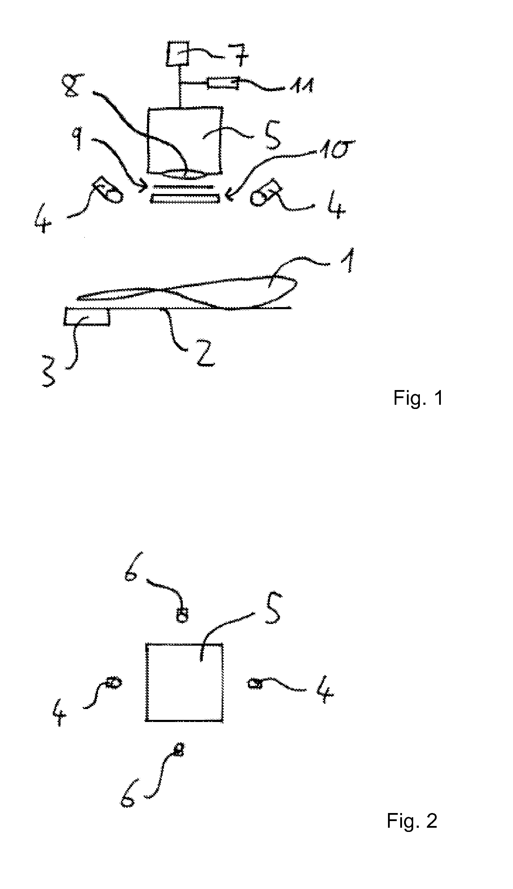

In the following, the mobile device is described with reference to Figures 1 and 2. The device comprises a sample holder 2 on which a plant sample 1, e.g. a plant leaf, can be attached. The relative position of the sample holder 2 within the mobile device may be adjusted by means of the adjustment device 3. Such adjustment devices 3 are well known in the art.

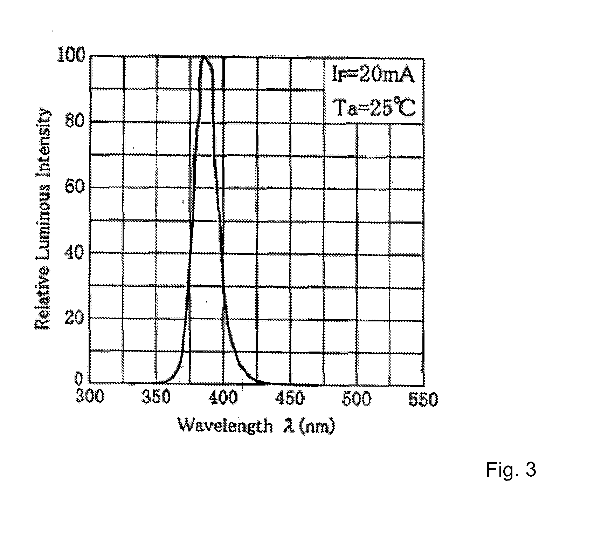

The mobile device further comprises an excitation source for emitting electromagnetic radiation. In the embodiment shown in Figures 1 and 2 two light-emitting diodes (LEDs) 4 are provided. According to one embodiment of the present invention, two ultra-violet light-emitting diodes, type no. E1S19-0P0A7-02, Toyoda Gosei, are used. The spectrum of the electromagnetic radiation of this LED is shown in Figure 3. The spectrum was measured at a temperature of 25° C and a DC forward current of 20 mA.

As can be seen from Figure 3, the electromagnetic radiation emitted by the light-emitting diode is basically between 350 nm and 450 nm. The wavelength at peak emission is about 387 nm. The wavelength having an intensity greater than 5% of the intensity at peak emission is in a range of 368 to 416 nm. In particular, no essential intensity is emitted at wavelengths above 450 nm by the light-emitting diode used according to this embodiment of the present invention.

According to another embodiment the electromagnetic radiation emitted by the light-emitting at peak emission is about 470 nm.

As can be seen from Figure 1, two light-emitting diodes 4 are arranged to emit electromagnetic radiation of the spectrum shown in Figure 3 to the sample 1 attached to the sample holder 2. The position where the sample 1 is attached to the sample holder 2 is called the sample position herein. The photons of the radiation emitted by the light-emitting diodes 4 reach directly, i.e. without passing any optical elements, the sample by which they are absorbed. The sample 1 then emits fluorescing light. The fluorescing light emitted by the sample 1 is detected by an imaging device 5, which is arranged on the same side as the light-emitting diodes 4. Between the sample position and the imaging device 5 an optical system 10 comprising one or more lenses is provided. The arrangement between the sample holder 2, the optical system 10, and the imaging device 5 can be altered by a single slider so that the magnification can be adjusted from 40 to 140. Additionally, both magnification and focus may be adjusted by the single slider at once.

The imaging device is a camera having an area sensor such as a CCD sensor. Furthermore, a lens 8 may be provided before the sensor. The imaging device 5 provides a spatially resolved image of the sample 1 showing the positions within the sample 1 emitting fluorescing light.

According to one embodiment of the present invention, a black-and-white camera that detects only the intensity of fluorescing light emitted by the sample 1 is used. In this case, a yellow filter 9 is arranged between the sample 1 and the imaging device 5.

Furthermore, a longpass filter may be used for filtering radiation of less than 500 nm.

According to another embodiment, the CCD sensor of the imaging device 5 provides colour resolution, while only the yellow component of the colour signal is used for the further analysis of the fluorescence.

The imaging device 5 is connected to a memory 11 for storing the digital data of the images detected by the imaging device 5 and an interface 7, such as a universal serial bus, for transferring the digital data detected by the imaging device 5 to an external device such as a computer.

As can be seen from Figure 2, the mobile detector may additionally comprise two further light-emitting diodes 6 for emitting white light for the illumination of the sample 1. The different light-emitting diodes 4 and 6 are controlled so that the light-emitting diodes 4, i.e. the excitation source, can be deactivated independently of the light-emitting diodes 6.

All parts of the mobile device are assembled within a housing, which is not shown in the figures in order to show the essential parts of the mobile device more clearly. The housing may comprise a shutter or the like for dimming out ambient light so that the fluorescing light from the sample 1 can be better detected by the imaging device 5.

The dimensions of the mobile device are such that it can easily be held in someone's hand. It may therefore also be called a hand-held mobile device. The dimensions of the mobile device according to one embodiment are approximately 10 cm x 10 cm x 25 cm. The device weight is approximately 600 g. According to another embodiment the dimensions of the mobile device are approximately 10 cm x 6 cm x 10 cm. The device weight is approximately 300 g

Within the housing a disposable or rechargeable battery is arranged for providing at least the imaging device 5 and light-emitting diodes 4 and 6 with power.

### Example:

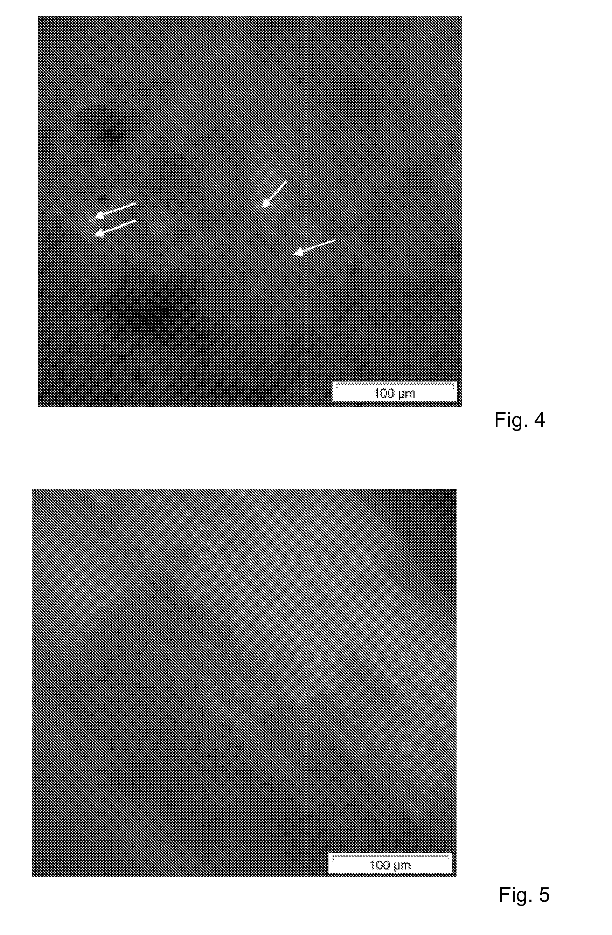

Both pustules of soybean rust and bean rust on leaves were labelled with goat anti soybean rust IgG (30 minutes), washed (phosphate buffered saline containing Tween^{®}20, pH 7.4), relabelled with FITC anti goat IgG (30 minutes), rinsed again and compared for green fluorescence using the mobile device according to the present invention. The device was equipped with a illumination kingsblue LED's wherein the wavelength of the emitted radiation at peak emission is about 470 nm. In front of the objective a long pass filter for filtering radiation of less than 500 nm was used. Green FITC-fluorescence was observed only with soybean rust, not with bean rust or other pathogens. Fig. 4 and 5 show pictures made by the device according to the present invention. Fig. 4 shows PHAKPA (asian soybean rust), wherein the arrows indicate areas of specific labelling. Fig. 4 shows PUCCRT (bean brown rust).

## Claims

1. Mobile device for fluorescence detection comprising an excitation source for emitting electromagnetic radiation to a sample position, wherein the wavelength of the emitted radiation at peak emission is in a range of 350 nm to 500 nm, and means for detecting the fluorescing light emitted from the sample position.

2. The mobile device of claim 1, wherein the mobile device is a hand-held device.

3. The mobile device of claim 1 or 2, wherein the largest dimension of the device is less than 30 cm and the weight of the device is less than 650 g.

4. The mobile device of claim 2, wherein the largest dimension of the device is less than 12 cm and the weight of the device is less than 320 g.

5. The mobile device of any one of the preceding claims, wherein the wavelength of the electromagnetic radiation of the excitation source having an intensity greater than 5% of the intensity at peak emission is in a range of 440 to 500 nm.

6. The mobile device any one of the preceding claims, wherein the wavelength of the excitation source at peak emission is about 470 nm.

7. The mobile device of any one of claims 1 to 4, wherein the wavelength of the electromagnetic radiation of the excitation source having an intensity greater than 5% of the intensity at peak emission is in a range of 368 to 416 nm.

8. The mobile device of any one of claims 1 to 4 or 7, wherein the wavelength of the excitation source at peak emission is about 387 nm.

9. The mobile device of any one of the preceding claims, wherein the excitation source is at least one light-emitting diode.

10. The mobile device of any one of the preceding claims, further comprising at least one light-emitting diode for emitting white light for illumination of a sample at the sample position.

11. The mobile device of claim 10, wherein the excitation source can be deactivated independently of the light-emitting diode for emitting white light.

12. The mobile device of any one of the preceding claims, wherein the detecting means is a photoelectric imaging device.

13. The mobile device of claim 12, wherein the imaging device is a camera providing a spatially resolved image.

14. The mobile device of claim 13, wherein the camera is a charged-coupled device camera.

15. The mobile device of any one of the preceding claims, further comprising means for magnifying the detected image of a sample at the sample position.

16. The mobile device of any one of the preceding claims, wherein the imaging device detects only the intensity of the fluorescing light emitted by the sample and wherein a yellow filter is arranged between the detecting means and the sample position.

17. The mobile device of any one of the preceding claims, further comprising a power supply for at least the excitation source and the detecting means.

18. The mobile device of any one of the preceding claims, further comprising a memory for storing the digital data detected by the detecting means.

19. The mobile device of any one of the preceding claims, further comprising an interface for transferring digital data detected by the imaging device to an external device.

20. Use of the mobile device according to any one of the preceding claims for fluorescence detection.
